# EUROPÄISCHE PATENTANMELDUNG

(11) **EP 0 702 487 A1**
(43) Veröffentlichungstag der Anmeldung: **20.03.1996**
(21) Anmeldenummer: 95202419.8
(22) Anmeldetag: 07.09.1995
(51) Int. Cl.: H04N 5/253

(54) **Verfahren und Schaltung zum Erkennen und Verdecken von Fehlern in einem Videosignal**

(30) Priorität: 15.09.1994 DE 4432787
(71) Anmelder: Philips Patentverwaltung GmbH, D-22335 Hamburg (DE); PHILIPS ELECTRONICS N.V., NL-5621 BA Eindhoven (NL)
(72) Erfinder: Wischermann, Gerhard, Dipl.-Ing., Röntgenstrasse 24, D-22335 Hamburg (DE)
(74) Vertreter: Volmer, Georg, Dipl.-Ing.

(57) **Zusammenfassung**

Es wird ein Verfahren und eine Schaltung Fig.1. zum Erkennen und Verdecken von durch vertikal verlaufende Filmkratzer verursachten Fehlern im Videosignal bei der fernsehmäßigen Filmabtastung vorgeschlagen. Hierbei wird ein Fehlersignal an von gestörten Bildpunkten erzeugten Fehlstellen abgeleitet und in Form eines Steuersignals für die Verdeckung der Fehler im Videosignal benutzt. Das Fehlersignal wird dabei nur dann erzeugt, wenn eine einstellbare, lokal beschränkte Kratzerbreite in horizontaler Richtung nicht überschritten wird und wenn jeder Kratzer im wesentlichen vertikal verläuft und wenn die Kratzerlänge etwa der Filmbildhöhe entspricht. Mit Hilfe des Fehlersignals werden schließlich die gestörten Stellen im Videosignal durch das entsprechende tiefpaßgefilterte Videosignal ersetzt.

## Beschreibung

Die Erfindung betrifft ein Verfahren zum Erkennen und Verdecken von durch vertikal verlaufende Filmkratzer verursachten Fehlern im Videosignal bei der fernsehmäßigen Filmabtastung, wobei ein Fehlersignal an von gestörten Bildpunkten erzeugten Fehlstellen abgeleitet und in Form eines Steuersignals für die Verdeckung der Fehler im Videosignal benutzt wird.

Ältere, häufig verwendete Filme zeigen im Bildbereich oft zwei Fehlerarten: Zum einen handelt es sich dabei um Schmutz und Staub auf der Oberfläche des Films, zum anderen um Kratzer in Laufrichtung des Filmes, sogenannte Laufschrammen, die verursacht werden durch mechanischen Kontakt der Filmführungselemente mit dem Bildbereich. Besonders störend treten diese Fehler bei der elektronischen Abtastung und Umkehrung von Negativfilmen als weiße Flecken bzw. Kratzer in Erscheinung.

In der deutschen Patentanmeldung P 43 43 095.3 wird ein Verfahren zur Staub- und Kratzerverdeckung im Zusammenhang mit der elektronischen Filmabtastung vorgeschlagen. Mittels zeitlich adaptiver Medianfilterung können Filmstaub und grober Filmschmutz sowie zufällig über das Filmbild verteilte Kratzer wirkungsvoll ausgefiltert werden, soweit sie in aufeinanderfolgenden Filmbildern nicht am gleichen Ort auftreten.

Der vorliegenden Erfindung liegt demgegenüber die Aufgabe zugrunde, ein Verfahren der eingangs genannten Art anzugeben, mit welchem stationäre, vertikale Laufkratzer, die sich auch über mehrere Filmbilder erstrecken können, wirkungsvoll verdeckt werden können.

Die Lösung dieser Aufgabe erfolgt dadurch, daß das Fehlersignal nur dann erzeugt wird, wenn eine einstellbare, lokal beschränkte Kratzerbreite in horizontaler Richtung nicht überschritten wird und wenn jeder Kratzer im wesentlichen vertikal verläuft und wenn die Kratzerlänge etwa der Filmbildhöhe entspricht, und daß mit Hilfe des Fehlersignals die gestörten Stellen im Videosignal durch das entsprechende tiefpaßgefilterte Videosignal ersetzt werden.

Das erfindungsgemäße Verfahren mit den kennzeichnenden Merkmalen des Patentanspruchs 1 hat den Vorteil, daß sowohl feine, nur die Filmoberfläche betreffende Laufkratzer als auch tiefe, bis in die Farbstoffschicht des Films reichende Kratzer damit so verdeckt werden können, daß im wiedergegebenen Bild an diesen Stellen keine Störungen mehr sichtbar sind.

Durch die in den Unteransprüchen aufgeführten Maßnahmen sind vorteilhafte Weiterbildungen und Verbesserungen des im Patentanspruch 1 angegebenen Verfahrens möglich. In weiteren Unteransprüchen ist eine vorteilhafte Schaltung zur Durchführung des erfindungsgemäßen Verfahrens angegeben.

Ein Ausführungsbeispiel der Erfindung ist in der Zeichnung dargestellt und in der nachfolgenden Beschreibung näher erläutert. Es zeigen:
Figur 1 ein Blockschaltbild zur Durchführung des erfindungsgemäßen Verfahrens,
Figur 2 das in Figur 1 als horizontales Tiefpaßfilter eingesetzte Medianfilter,
Figur 3 Zeitdiagramme zur Veranschaulichung der Kratzerverdeckung,
Figur 4 das in Figur 1 angegebene horizontale Hochpaßfilter,
Figur 5 Zeitdiagramme der in Figur 4 vorkommenden Signale,
Figur 6 das in Figur 1 angegebene vertikale Tiefpaßfilter mit zeilensortierer,
Figur 7 Zeitdiagramme der in Figur 6 vorkommenden Signale,
Figur 8 eine erste grafische Darstellung der Wirkungsweise des vertikalen Tiefpaßfilters nach Figur 6,
Figur 9 eine zweite grafische Darstellung der Wirkungsweise des vertikalen Tiefpaßfilters nach Figur 6,
Figur 10 die in Figur 1 vorkommende vertikale Integratorschaltung,
Figur 11 die in Figur 1 angegebenen Komparator- und Signalverbreiterungsschaltung,
Figur 12 Zeitdiagramme der in Figur 11 vorkommenden Signale.

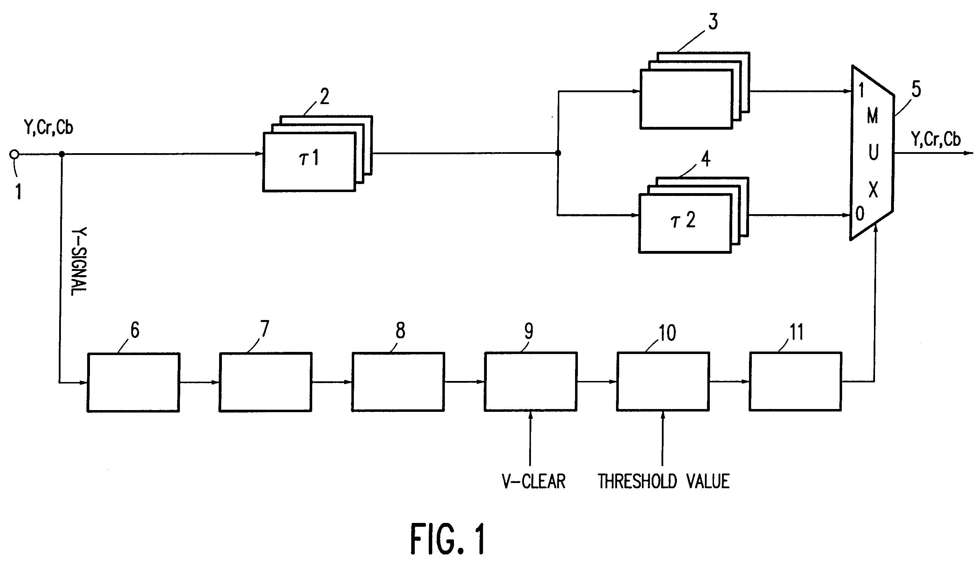

In Figur 1 ist eine Schaltung zur Durchführung des erfindungsgemäßen Verfahrens dargestellt. Der obere Pfad stellt den Hauptsignalweg dar, in welchem die über Eingang 1 zugeführten, vorzugsweise digitalen Komponentensignale Y, Cr, Cb identisch verarbeitet werden. Diese Signale werden zunächst über eine Verzögerungseinrichtung 2 sowohl einem horizontalen Tiefpaßfilter 3 als auch einer weiteren zum Laufzeitausgleich für das Filter 3 dienenden Verzögerungseinrichtung 4 zugeführt. Die Ausgangssignale des Filters 3 sowie der Verzögerungseinrichtung 4 werden dann je einem Eingang eines Multiplexers 5 zugeleitet, an dessen Ausgang die von Fehlerstellen freien Videosignale abnehmbar sind.

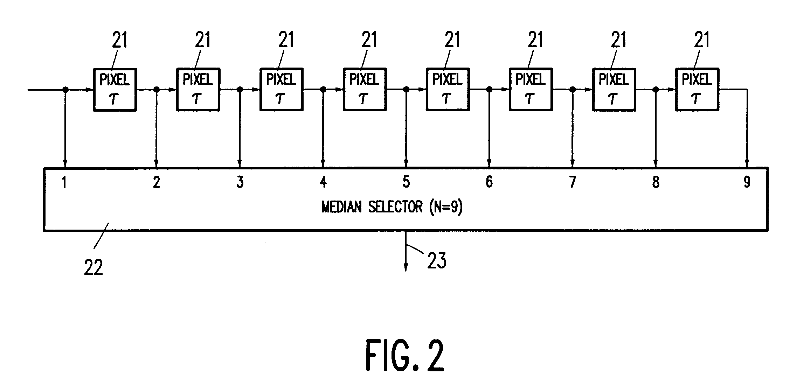

Aus dem Luminanzsignal Y wird im unteren Pfad in mehreren Verarbeitungsschritten ein Steuersignal abgeleitet, welches die horizontale Lage eines oder mehrerer Filmkratzer markiert. An diesen markierten Stellen werden im Hauptsignalweg die gestörten Bildpunkte durch die Ausgangswerte des in horizontaler Richtung wirkenden Tiefpaßfilters 3 ersetzt. Das horizontale Tiefpaßfilter 3 kann als Transversalfilter oder auch - gemäß Figur 2 - als Medianfilter ausgeführt sein.

Das in Figur 2 dargestellte Medianfilter 3 gemäß Figur 1 besteht hierbei aus acht Bildpunkt-Verzögerungseinrichtungen 21 mit neun Abgriffen, welche an die neun Eingänge eines Medianselektors 22 angeschlossen sind. Am Ausgang 23 des Medianselektors 22 ist dann das horizontal mediangefilterte Videosignal abnehmbar. Die Länge des Filters bzw. die erforderliche Anzahl der Filterabgriffe hängt ab von der Breite der zu erwartenden Kratzer. Mit N = 9 Abgriffen können bis zu (N-1)/2 = 4 Bildpunkte breite Störungen mit dem Medianfilter unterdrückt werden. Bei 13,5 MHz Abtastfrequenz entspricht dies einer Dauer von 300 ns, was in der Praxis vollkommen ausreicht. Es ist sinnvoll, die Filterlänge an die maximale Kratzerbreite anzupassen, um den horizontalen Auflösungsverlust in der Kratzerumgebung gering zu halten.

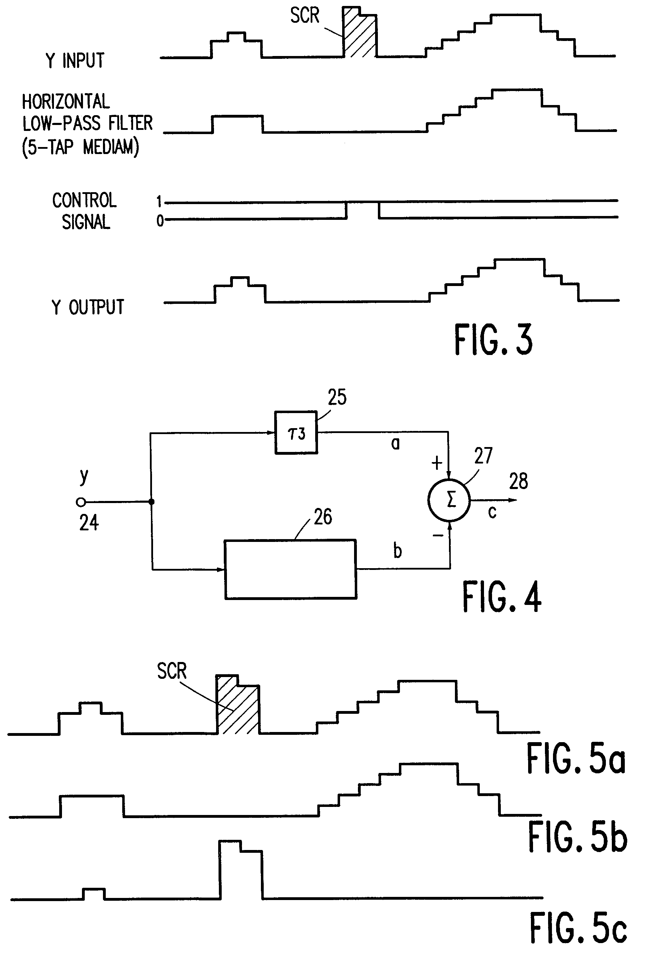

In Figur 3 sind Zeitdiagramme beispielsweise für das Luminanzsignal Y zur Veranschaulichung der Kratzerverdeckung dargestellt. Dieses Signal Y sei zum Beispiel in der Mitte der Zeile durch einen zwei Takte breiten Kratzer SCR gestört, was durch das in der weiter unten beschriebenen Kratzererkennungsschaltung erzeugte Steuersignal mit einem "1-Impuls" signalisiert wird. Mit Hilfe des Multiplexers 5 in Figur 1 werden an dieser Stelle die Ausgangswerte des horizontalen Tiefpaßfilters 3 eingefügt, welches in diesem Beispiel als Medianfilter mit fünf Abgriffen ausgeführt ist. Das Ausgangssignal Y ist somit an dieser Stelle störbefreit, ohne daß in anderen Bereichen Details verlorengehen.

Im folgenden soll nun die Ableitung des Steuersignals beschrieben werden, wobei zunächst das Luminanzsignal Y in Figur 1 einem horizontalen Hochpaßfilter 6 zugeführt wird, um aus dem Bildsignal alle senkrechten Strukturen mit geringer Impulsbreite zu extrahieren. Mit Hilfe des Zeilensortierers 7 und des vertikalen Tiefpaßfilters 8 wird der senkrechte Verlauf des Kratzers festgestellt. Anschließend wird zur Extraktion der Kratzerinformation mit einem vertikalen Integrator 9 der Mittelwert über alle Zeilen eines Teilbildes gebildet. Auf diese Weise können restliche Bildinformationen und überlagertes Rauschen ausgemittelt werden. In der nachfolgenden Komparatorschaltung 10 können positive bzw. negative Schwellwerte für das Auftreten von weißen bzw. schwarzen Kratzern definiert werden. Das Ausgangssignal der Komparatorschaltung wird schließlich einer Signalverbreiterungsschaltung 11 zugeführt, an deren Ausgang das Steuersignal für die Steuerung des Multiplexers 5 abnehmbar ist.

Da bekanntlich eine Hochpaßfilterung durch Subtraktion eines komplementär tiefpaßgefilterten vom (laufzeitgleichen) ungefilterten Eingangssignal darstellbar ist, wird gemäß Figur 4 ein auf diese Weise realisiertes Medianfilter mit Hochpaßcharakter angegeben. Im Gegensatz zu linearen Transversal- oder Rekursivfiltern, die mathematisch mit einer Übertragungsfunktion beschrieben werden können, ist ein Hochpaßfilter mit Mediancharakter nur auf diese Weise realisierbar. Das Luminanzsignal Y wird also über einen Eingang 24 einerseits einer Verzögerungseinrichtung 25 und andererseits einem Medianfilter 26 zugeführt, deren Ausgangssignale einer Subtraktionsschaltung 27 zugeleitet werden. Am Ausgang 28 ist somit ein mediangefiltertes Luminanzsignal abnehmbar.

In Figur 5 sind die gemäß Figur 4 verarbeiteten Signale a, b, c dargestellt. Wie man leicht erkennen kann, wird hier der Vorteil der medianen Hochpaßfilterung deutlich, da das Differenzsignal c ein exaktes Abbild des Kratzers ohne irgendwelche Impulsverformungen darstellt. Mit dieser Hochpaßfilterung wird das erste Kriterium für einen Kratzer, nämlich die Impulsbreite geprüft. Wenn das Medianfilterfenster auf fünf Bildpunkte eingestellt ist, werden maximal zwei Bildpunkte breite Impulse unverändert durchgelassen.

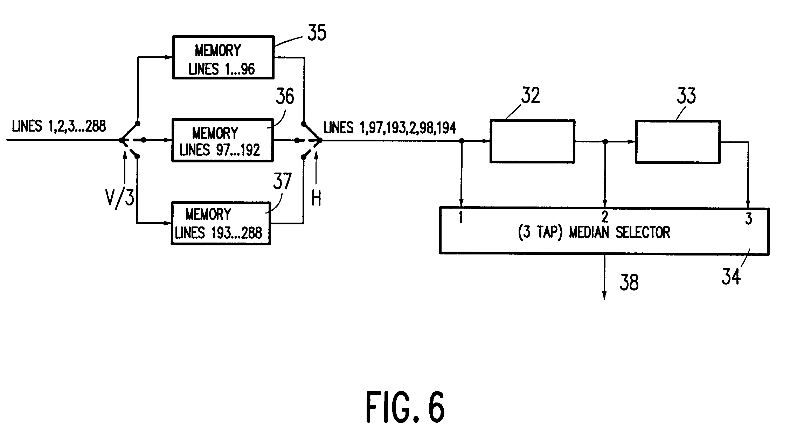

Das zweite Merkmal eines Kratzers ist sein im wesentlichen senkrechter Verlauf. Dieses Kriterium wird gemäß Figur 1 mit dem nachfolgenden Zeilensortierer 7 in Verbindung mit dem Vertikaltiefpaßfilter 8 geprüft. In Figur 6 wird hierzu ein Medianfilter 31 mit drei Abgriffen von zwei Zeilenverzögerungseinrichtungen 32, 33 in Verbindung mit einem Medianselektor 34 benutzt, dem drei Speicherbänke 35, 36, 37 zum Umsortieren der Zeilen vorgeschaltet sind. In die erste Speicherbank 35 wird das obere Drittel eines Teilbildes eingeschrieben, in die zweite Speicherbank 36 das mittlere Drittel und in die dritte Speicherbank 37 das untere Bilddrittel. Beim Auslesen wird nach jeder Zeile zyklisch die Speicherbank gewechselt. Dem Medianfilter 31 werden also die Zeilen in der Reihenfolge 1, 97, 193, 2, 98, 194 usw. zugeführt. Die Verzögerungen zwischen den drei Abgriffen des Medianfilters 31 beträgt somit jeweils ein Drittel des aktiven Teilbildes.

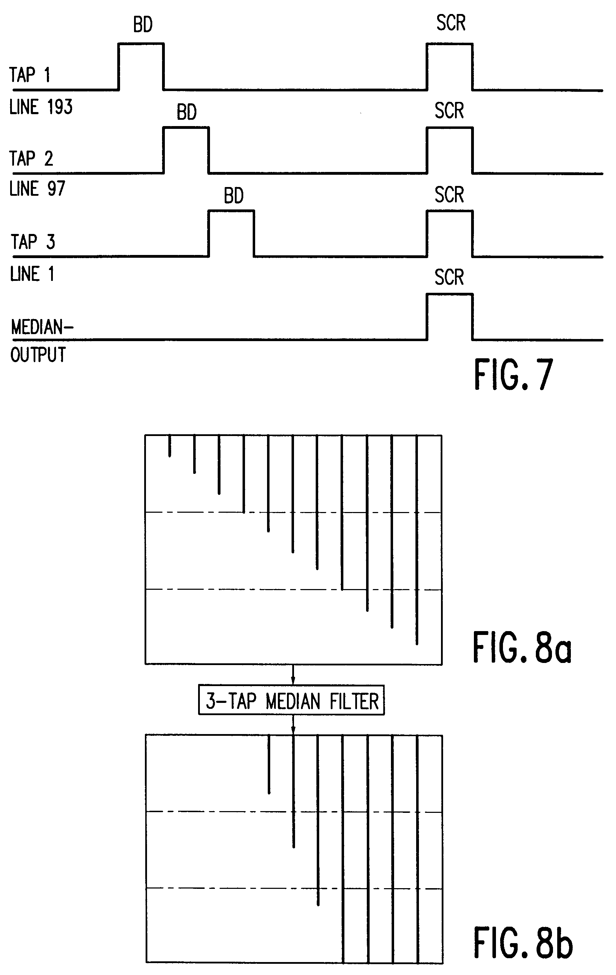

Anhand der Zeitdiagramme gemäß Figur 7 wird deutlich, daß ein echter (d.h. senkrechter Kratzer) das Medianfilter 31 ungehindert passieren kann, während ein kratzerähnliches Bilddetail BD bereits aufgrund einer nur geringen Schräglage vollständig unterdrückt wird, so daß am Ausgang 38 des Medianfilters 31 nur das Fehlersignal SCR abnehmbar ist.

Das dritte Merkmal eines potentiellen Kratzers, nämlich die Längenausdehnung wird ebenfalls vom Vertikal- Medianfilter 31 geprüft. Da eine Medianfilterung gewissermaßen das Ergebnis einer Mehrheitsentscheidung darstellt, werden schmale senkrechte Strukturen einerseits verkürzt, falls ihre Länge kleiner als die halbe Bildhöhe ist, während sie andererseits verlängert werden, wenn ihre Länge die halbe Bildhöhe überschreitet.

In Figur 8 ist dieses Verhalten grafisch veranschaulicht worden. Strukturen, die kürzer als ein Drittel der Bildhöhe sind, werden komplett unterdrückt - siehe die ersten vier senkrechten Striche in Figur 8a -, wohingegen Strukturen ab zwei Drittel der Bildhöhe auf die volle Länge expandiert werden - siehe die letzten vier senkrechten Striche.

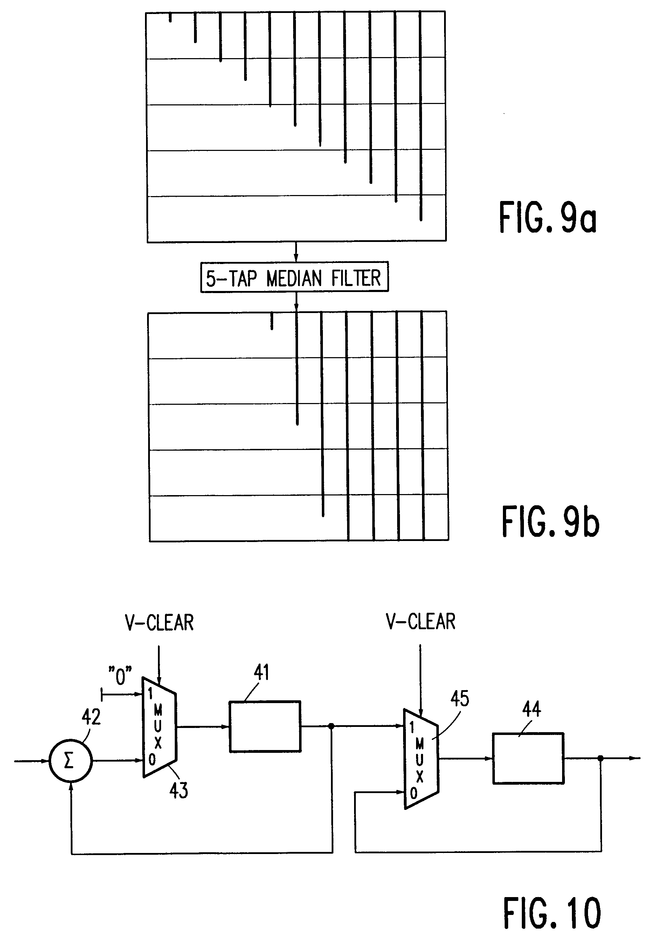

Bei einer Medianfilterung mit fünf Abgriffen läßt sich die Selektivität zwischen vollständiger Expansion oder vollständiger Kompression noch steigern, siehe dazu Figur 9. In Figur 6 sind die drei Speicher 35, 36, 37 zum Umsortieren der Zeilen dann entsprechend durch fünf Speicher zu ersetzen, jeweils mit, der Kapazität eines Fünftel Teilbildes. Eine andere Möglichkeit zur Steigerung der Selektivität ist eine wiederholte Anwendung der in Figur 6 angegebenen Filterstruktur.

Nach der horizontalen Hochpaßfilterung und der vertikalen Tiefpaßfilterung zur Extraktion der Kratzerinformation wird nun der Mittelwert über alle Zeilen eines Teilbildes mit Hilfe des in Figur 10 dargestellten vertikalen Integrators 9 gebildet. Damit können restliche Bildinformation und überlagertes Rauschen ausgemittelt werden. Ein sogenannter Akkumulator, bestehend aus einer Zeilenverzögerungseinrichtung 41, welche auf einen Eingang einer Summierschaltung 42 rückgekoppelt ist, an deren anderen Eingang das Ausgangssignal des vertikalen Tiefpaßfilters 8 gemäß Figur 1 anliegt, wird über einen Multiplexer 43 zu Beginn eines Teilbildes mit dem Impuls V-Clear (mit der Dauer einer Zeile) auf Null gesetzt. In dem Zeilenspeicher 41 wird das Zwischenergebnis der Integration fortlaufend gespeichert und am Ende eines Teilbildes in einen zweiten Zeilenspeicher 44 übertragen. Ein zweiter Multiplexer 45 läßt das Akkumulationsergebnis für die Dauer eines Teilbildes im Speicher 44 rezirkulieren, während der Akkumulator (41, 42, 43) die nächste Integration ausführt.

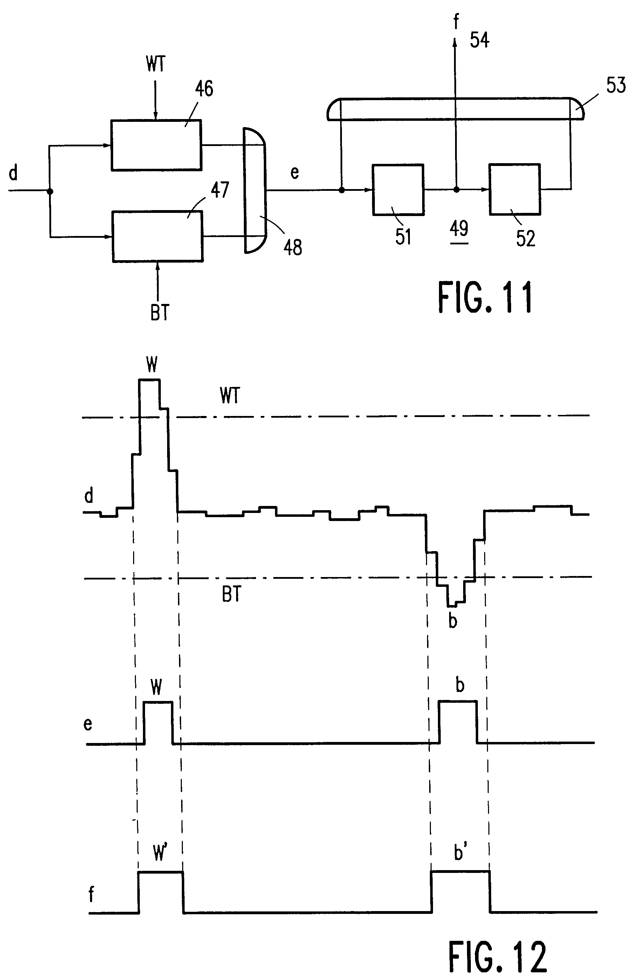

Das Ausgangssignal des vertikalen Integrators 9 wird nun einer in Figur 11 dargestellten Komparatorschaltung zugeführt. Diese Komparatorschaltung umfaßt zwei Komparatoren 46, 47, von denen dem Komparator 46 ein positiver Schwellwert WT für weiße Kratzer und dem Komparator 47 ein negativer Schwellwert BT für schwarze Kratzer zugeführt wird. Die beiden Komparatorsignale werden über eine ODER-Schaltung 48 verknüpft und einer nachfolgenden Signalverbreiterungsschaltung 49 zugeführt. Diese Schaltung besteht hierbei aus zwei Bildpunktverzögerungseinrichtungen 51, 52, deren drei Abgriffe über eine weitere ODER-Schaltung 53 verknüpft sind, so daß am Ausgang 54 das von der Kratzerinformation abgeleitete Steuersignal zur Umsteuerung des Multiplexers 5 gemäß Figur 1 abnehmbar ist.

In Figur 12 ist das Ausgangssignal d des vertikalen Integrators 9 über der Zeit (eine Zeile) grafisch dargestellt. Aus dem Signalmittelwert, welcher um Null liegt, heben sich zwei Spitzen w und b heraus, die von einem weißen bzw. einem schwarzen Kratzer herrühren. Diese beiden Spitzen w und b werden in den Komparatoren 46 und 47 mit den Schwellwerten WT und BT verglichen und über die ODER-Schaltung 48 verknüpft, so daß am Ausgang des Komparators entsprechende Impulse e entstehen.

Dieses Komparator-Ausgangssignal mit den beiden Impulsen w und b wird nun noch der Signalverbreiterungsschaltung 49 zugeführt, an deren Ausgang die so verbreiterten Impulse w' und b'als Steuersignal abnehmbar sind. Hier ist leicht zu erkennen, daß auf diese Weise die Fußpunkte der Kratzerimpulse durch das Steuersignal sicher erfaßt werden. Ohne diese Verbreiterungsschaltung müßten die Schwellwerte so niedrig gelegt werden, daß bei schwachem Kontrast der Kratzer die Gefahr einer Fehltriggerung durch restliche Bildteile oder Rauschen bestünde.

## Patentansprüche

1. Verfahren zum Erkennen und Verdecken von durch vertikal verlaufende Filmkratzer verursachten Fehlern im Videosignal bei der fernsehmäßigen Filmabtastung, wobei ein Fehlersignal an von gestörten Bildpunkten erzeugten Fehlstellen abgeleitet und in Form eines Steuersignals für die Verdeckung der Fehler im Videosignal benutzt wird,
dadurch gekennzeichnet,
daß das Fehlersignal dann und nur dann erzeugt wird, wenn eine einstellbare, lokal beschränkte Kratzerbreite in horizontaler Richtung nicht überschritten wird und wenn jeder Kratzer im wesentlichen vertikal verläuft und wenn die Kratzerlänge etwa der Filmbildhöhe entspricht, und daß mit Hilfe des Fehlersignals die gestörten Stellen im Videosignal durch das entsprechende tiefpaßgefilterte Videosignal ersetzt werden.

2. Verfahren nach Anspruch 1,
dadurch gekennzeichnet,
daß das tiefpaßgefilterte Videosignal durch Medianfilterung abgeleitet wird.

3. Verfahren nach Anspruch 1,
dadurch gekennzeichnet,
daß zur Erzeugung des Fehlersignals das vom Videosignal entnommene Luminanzsignal bezüglich der Kratzerbreite mittels Horizontal-Hochpaßfilterung, bezüglich des Kratzerverlaufs und der Kratzerlänge mittels Zeilensortierung und Vertikal-Tiefpaßfilterung durch Medianfilterung geprüft wird.

4. Verfahren nach Anspruch 3,
dadurch gekennzeichnet, daß von dem nach Horizontal-Hochpaßfilterung und VertikalTiefpaßfilterung erzeugten Fehlersignal durch in horizontaler Richtung wirkende Signalverbreitung das für die Fehlerverdeckung benutzte Steuersignal abgeleitet wird.

5. Schaltung zur Durchführung des Verfahrens nach Anspruch 1,
dadurch gekennzeichnet,
daß ein Multiplexer (5) vorgesehen ist, an dessen ersten Eingang das zu korrigierende Videosignal (Y, Cr, Cb) über eine Horizontal-Tiefpaßschaltung (3), an dessen zweiten Eingang das durch eine Laufzeitschaltung (4) entsprechend verzögerte Videosignal anliegen, und dessen Steuereingang das vom Fehlersignal abgeleitete Steuersignal zugeführt ist, daß ein Horizontal-Hochpaßfilter (6) vorgesehen ist, an dessen Eingang das vom Videosignal abgeleitete Luminanzsignal (Y) anliegt, dessen Ausgang mit dem Eingang eines Zeilensortierers (7) verbunden ist, welcher ausgangsseitig an ein Vertikal-Tiefpaßfilter (8) angeschlossen ist, daß der Ausgang des Tiefpaßfilters (8) über einen Vertikal-Integrator (9) mit einer Komparatorschaltung (10) für weiße und schwarze Kratzer verbunden ist und daß am Ausgang des Komparators (10) eine Signalverbreiterungsschaltung (11) vorgesehen ist, deren Ausgang mit dein Steuereingang des Multiplexers (5) verbunden ist.

6. Schaltung nach Anspruch 5,
dadurch gekennzeichnet,
daß die Horizontal-Tiefpaßschaltung (3) ein Medianfilter (21, 22) mit bis zu etwa neun Bildpunkt-Verzögerungsabgriffen ist.

7. Schaltung nach Anspruch 5,
dadurch gekennzeichnet,
daß das Horizontal-Hochpaßfilter (6) aus einem Medianfilter (26) mit bis zu etwa fünf Bildpunkt-Abgriffen und einem Laufzeitglied (25) entsprechender Verzögerung besteht, deren Ausgänge mit den Eingängen einer Subtraktionsschaltung (27) verbunden sind, wobei das tiefpaßgefilterte Signal vom ungefilterten Signal subtrahiert wird.

8. Schaltung nach Anspruch 5,
dadurch gekennzeichnet,
daß der Zeilensortierer (7) aus mehreren Speicherblöcken (35 bis 37) zur Speicherung je eines entsprechenden Teiles eines Teilbildes besteht.

9. Schaltung nach Anspruch 5 und 8,
dadurch gekennzeichnet,
daß das Vertikal-Tiefpaßfilter (8) aus einem Medianfilter (31) mit einer der Anzahl der Speicherblöcke entsprechenden Anzahl von Zeilenverzögerungs-Abgriffen besteht.

10. Schaltung nach Anspruch 5,
dadurch gekennzeichnet,
daß der Vertikal-Integrator (9) aus einem Akkumulator mit einem zwischen einer Summierschaltung (42) und einem ersten Zeilenspeicher (41) angeordneten ersten Multiplexer (43) und aus einem daran angeschlossenen zweiten Multiplexer (45) mit nachfolgenden auf den zweiten Multiplexer (45) rückgekoppelten Zeilenspeicher (44) besteht, wobei mittels des ersten Zeilenspeichers (41) während eines Teilbildes eine Integration stattfindet, deren Ergebnis in den zweiten Zeilenspeicher (44) übertragen wird, in den es für die Dauer eines Teilbildes rezirkuliert.

11. Schaltung nach Anspruch 5,
dadurch gekennzeichnet,
daß die Komparatorschaltung (10) aus zwei parallel geschalteten Komparatoren (46, 47) besteht, von denen der eine (46) mit einem postiven Schwellwert für weiße Kratzer und der andere (47) mit einem negativen Schwellwert für schwarze Kratzer versehen ist und deren Ausgänge über eine ODER-Schaltung (48) verknüpft sind.

12. Schaltung nach Anspruch 5,
dadurch gekennzeichnet,
daß die Signalverbreiterungsschaltung (11) aus mehreren hintereinandergeschalteten Bildpunkt-Laufzeitgliedern (51, 52) besteht, deren Aus- bzw. Eingänge an je einen Eingang einer ODER-Schaltung (53) angeschlossen sind, an deren Ausgang (54) das verbreiterte Steuersignal abnehmbar ist.
